# EUROPEAN PATENT APPLICATION

(11) **EP 1 669 860 A2**
(43) Date of publication of application: **14.06.2006**
(21) Application number: 05111004.7
(22) Date of filing: 21.11.2005
(51) Int. Cl.: G06F 9/44

(54) **Integrated help user interface for internet-based and local help content**

(30) Priority: 10.12.2004 US 9407
(71) Applicant: Microsoft Corporation, Redmond WA 98052 (US)
(72) Inventor: Simons, Nicholas M., Redmond, WA 98052 (US); Wiljanen, Joel Erik, Redmond, WA 98052 (US); Beswetherick, John T., Redmond, WA 98052 (US); Chaudhry, Irfaan Shaukat, Redmond, WA 98052 (US); Ferrier, Tracy, Redmond, WA 98052 (US); Gauthier, Matthew Charles, Redmond, WA 98052 (US); Kincaid, Stephen A., Redmond, WA 98052 (US); Lawrence, Eric Matthew, Redmond, WA 98052 (US); Lowry, Kent Rogers, Redmond, WA 98052 (US); Sadler, Jennifer, Redmond, WA 98052 (US)
(74) Representative: Grünecker, Kinkeldey, Stockmair & Schwanhäusser Anwaltssozietät

(57) **Abstract**

An integrated help content viewer (user interface) is provided that gives a consistent user interface across multiple applications and that smoothly transitions between offline and online help content sources. A single client-side help content viewer is provided that is displayed over or adjacent to a given application user interface (e.g., word processor work space) for allowing a query of offline or online help content associated with a given topic. The help content viewer may be pinned to a user interface associated with a given application so that the help content viewer remains in a position above the user interface even if a user interface of a different application is launched.

## Description

### Field of the Invention

The present invention generally relates to the provision of help content associated with computer software applications. More particularly, the present invention relates to an integrated client help viewer for Internet-based and local assistance/help content.

### Background of the Invention

With the advent of the computer age, computer and software users have grown accustomed to user-friendly software applications that help them write, calculate, organize, prepare presentations, send and receive electronic mail, make music, and the like. For example, modem electronic word processing applications allow users to prepare a variety of useful documents. Modern spreadsheet applications allow users to enter, manipulate and organize data. Modern electronic slide presentation applications allow users to create a variety of slide presentations containing text, pictures, data or other useful objects.

In order to obtain helpful information about the operation of such applications, including the operation of particular aspects or functionality of such applications, many such applications provide a help function that allows a user to query an offline or online help application for assistance or information. For example, according to some applications, a user may select a key, such as the F1 key, or select a help icon or button to launch a help pane or viewer in which a user may enter a question or from which a user may select from a list of frequently asked questions. Because offline help functions typically offer a limited amount of pre-populated help content, some applications are associated with online help functions that allow the user to connect to a server via the Internet to get a more up-to-date or more comprehensive answer to a given question. Unfortunately, often the connection between the local client-side application and the server-side help function is lost, and an error condition results. The user must then dismiss an error alert and return to an offline help function in order to obtain the desired help content. Such switching between the offline and online help functionality does not produce a very satisfactory user experience.

In addition, in many cases, the user interface look and feel and the associated user experience are different between online help functions and offline help functions. Thus, the user experience between online and offline help is inconsistent and potentially confusing. Similarly, the help functions of different applications often have a very different look and feel, and the user experience across different applications is not very consistent. For example, a multiple functionality software suite may provide a word processing application, a spreadsheet application, a slide presentation application, and the like. If each of the different applications has a different help function (and a different help function user interface), the user experience across the different applications may lack consistency and enjoyment.

Accordingly, there is a need for an improved help function that provides a consistent user experience across different applications and that provides a smooth transition between offline and online help content sources. It is with respect to these and other considerations that the present invention has been made.

### Summary of the Invention

Embodiments of the present invention solve the above and other problems by providing an integrated help content viewer (user interface) that provides a consistent user interface across multiple applications and that smoothly transitions between offline and online help content sources. According to embodiments of the present invention, a single client-side help content viewer is provided that is displayed over or adjacent to a given application user interface (e.g., word processor work space) for allowing a query of offline or online help content associated with a given topic. The help content viewer may be pinned to a user interface associated with a given application so that the help content viewer remains in a position above the user interface even if the help content viewer is no longer the active application.

The scope of the help content viewer is associated initially with the application focused on by the user when the viewer is launched. A plurality of scope indicators is provided to alert the user of the present scope of the viewer (e.g., word processor versus spreadsheet application). The scope of the help content viewer may be selectively changed, or the scope may be changed automatically when a different application is used to invoke the help content viewer. Additionally, the scope may be changed automatically by navigating to help content associated with a different scope from the initial scope.

During use of the help content viewer, the offline/online connection state is provided in the viewer. If the connection state is offline, a user is prompted that online connection may be effected if desired and if presently available. If an online help session is in progress and the online connection is lost, a notification is provided in the help content viewer, but an error condition is not presented. Instead, the help functionality application automatically retrieves and displays help content in the viewer from an offline help content source so that the help session is not interrupted or terminated as a result of the loss of online connection. If the online connection becomes available again, a notification is provided, and help content retrieval from the online source may be automatically or selectively restored. According to one aspect of the invention, during online connection, retrieved help content may be stored locally for display in the help content viewer during subsequent offline help sessions.

These and other features and advantages, which characterize the present invention, will be apparent from a reading of the following detailed description and a review of the associated drawings. It is to be understood that both the foregoing general description and the following detailed description are exemplary and explanatory only and are not restrictive of the invention as claimed.

### Brief Description of the Drawings

Fig. 1 is a block diagram showing the architecture of a personal computer that provides an illustrative operating environment for embodiments of the present invention.
Fig. 2 is a simplified block diagram showing interaction between a focused on client application, a client help application, and a server-side help content source according to embodiments of the present invention.
Fig. 3 illustrates a computer screen display showing an integrated help content viewer according to embodiments of the present invention.
Fig. 4 illustrates a computer screen display showing a portion of the help content viewer illustrated in Fig. 3.
Fig. 5 is a flow diagram showing an illustrative routine for displaying help content in an integrated help content viewer and for transitioning between an offline and an online connection state according to embodiments of the present invention.
Fig. 6 illustrates a computer screen display showing a help content viewer and showing a control for selectively switching between help content scopes according to embodiments of the present invention.
Fig. 7 illustrates a computer screen display of a help content viewer showing a search entry point for searching one or more help topics.
Fig. 8 illustrates a computer screen display of a help content viewer showing a search box in which a help content topic may be entered.
Fig. 9 is a block diagram illustrating the pinning of a help content viewer to a focused on application user interface according to embodiments of the present invention.

### Detailed Description of the Preferred Embodiment

As briefly described above, embodiments of the present invention are directed to an integrated help content viewer that provides a consistent user interface across multiple applications and that smoothly transitions between offline and online help content sources. In the following detailed description, references are made to the accompanying drawings that form a part hereof, and in which are shown by way of illustrations specific embodiments or examples. These embodiments may be combined, other embodiments may be utilized, and structural changes may be made without departing from the spirit or scope of the present invention. The following detailed description is therefore not to be taken in a limiting sense and the scope of the present invention is defined by the appended claims and their equivalents.

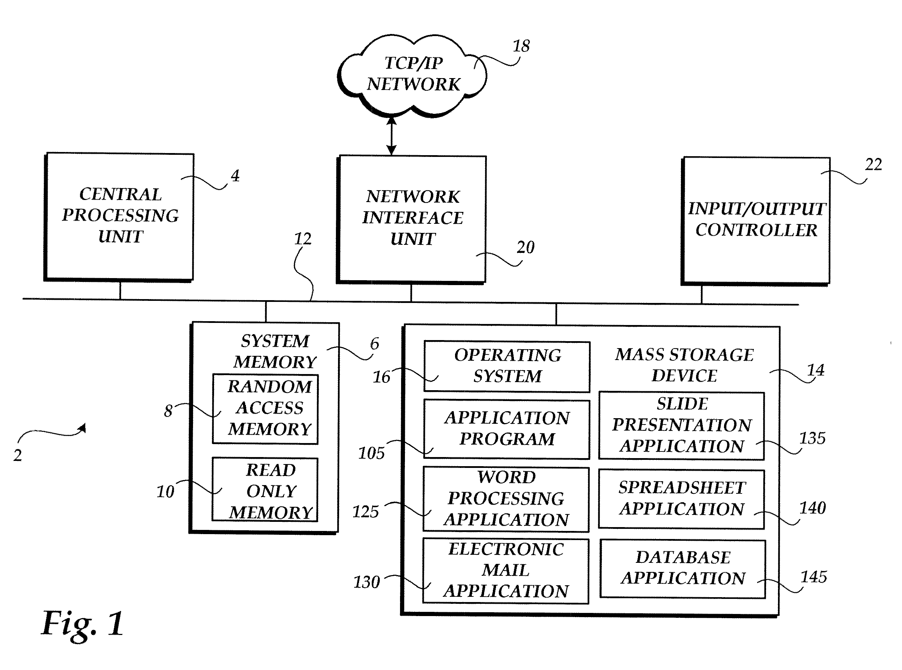

Referring now to the drawings, in which like numerals represent like elements through the several figures, aspects of the present invention and the exemplary operating environment will be described. Fig. 1 and the following discussion are intended to provide a brief, general description of a suitable computing environment in which the invention may be implemented. While the invention will be described in the general context of program modules that execute in conjunction with an application program that runs on an operating system on a personal computer, those skilled in the art will recognize that the invention may also be implemented in combination with other program modules.

Generally, program modules include routines, programs, components, data structures, and other types of structures that perform particular tasks or implement particular abstract data types. Moreover, those skilled in the art will appreciate that the invention may be practiced with other computer system configurations, including handheld devices, multiprocessor systems, microprocessor-based or programmable consumer electronics, minicomputers, mainframe computers, and the like. The invention may also be practiced in distributed computing environments where tasks are performed by remote processing devices that are linked through a communications network. In a distributed computing environment, program modules may be located in both local and remote memory storage devices.

Turning now to Fig. 1, an illustrative computer architecture for a personal computer 2 for practicing the various embodiments of the invention will be described. The computer architecture shown in Fig. 1 illustrates a conventional personal computer, including a central processing unit 4 ("CPU"), a system memory 6, including a random access memory 8 ("RAM") and a read-only memory ("ROM") 10, and a system bus 12 that couples the memory to the CPU 4. A basic input/output system containing the basic routines that help to transfer information between elements within the computer, such as during startup, is stored in the ROM 10. The personal computer 2 further includes a mass storage device 14 for storing an operating system 16, application programs, such as the application program 205, and data.

The mass storage device 14 is connected to the CPU 4 through a mass storage controller (not shown) connected to the bus 12. The mass storage device 14 and its associated computer-readable media, provide non-volatile storage for the personal computer 2. Although the description of computer-readable media contained herein refers to a mass storage device, such as a hard disk or CD-ROM drive, it should be appreciated by those skilled in the art that computer-readable media can be any available media that can be accessed by the personal computer 2.

By way of example, and not limitation, computer-readable media may comprise computer storage media and communication media. Computer storage media includes volatile and non-volatile, removable and non-removable media implemented in any method or technology for storage of information such as computer-readable instructions, data structures, program modules or other data. Computer storage media includes, but is not limited to, RAM, ROM, EPROM, EEPROM, flash memory or other solid state memory technology, CD-ROM, DVD, or other optical storage, magnetic cassettes, magnetic tape, magnetic disk storage or other magnetic storage devices, or any other medium which can be used to store the desired information and which can be accessed by the computer.

According to various embodiments of the invention, the personal computer 2 may operate in a networked environment using logical connections to remote computers through a TCP/IP network 18, such as the Internet. The personal computer 2 may connect to the TCP/IP network 18 through a network interface unit 20 connected to the bus 12. It should be appreciated that the network interface unit 20 may also be utilized to connect to other types of networks and remote computer systems. The personal computer 2 may also include an input/output controller 22 for receiving and processing input from a number of devices, including a keyboard or mouse (not shown). Similarly, an input/output controller 22 may provide output to a display screen, a printer, or other type of output device.

As mentioned briefly above, a number of program modules and data files may be stored in the mass storage device 14 and RAM 8 of the personal computer 2, including an operating system 16 suitable for controlling the operation of a networked personal computer, such as the WINDOWS operating systems from Microsoft Corporation of Redmond, Washington. The mass storage device 14 and RAM 8 may also store one or more application programs. In particular, the mass storage device 14 and RAM 8 may store an application program 105 for providing a variety of functionalities to a user. For instance, the application program 105 may comprise many types of programs such as a word processing application, a spreadsheet application, a desktop publishing application, and the like. According to an embodiment of the present invention, the application program 205 comprises a multiple functionality software application suite for providing functionality from a number of different software applications. Some of the individual program modules that may comprise the multiple functionality application suite 205 include a word processing application 125, a slide presentation application 135, a spreadsheet application 140 and a database application 145. An example of such a multiple functionality application suite 205 is OFFICE manufactured by Microsoft Corporation. Other software applications illustrated in Fig. 1 include an electronic mail application 130.

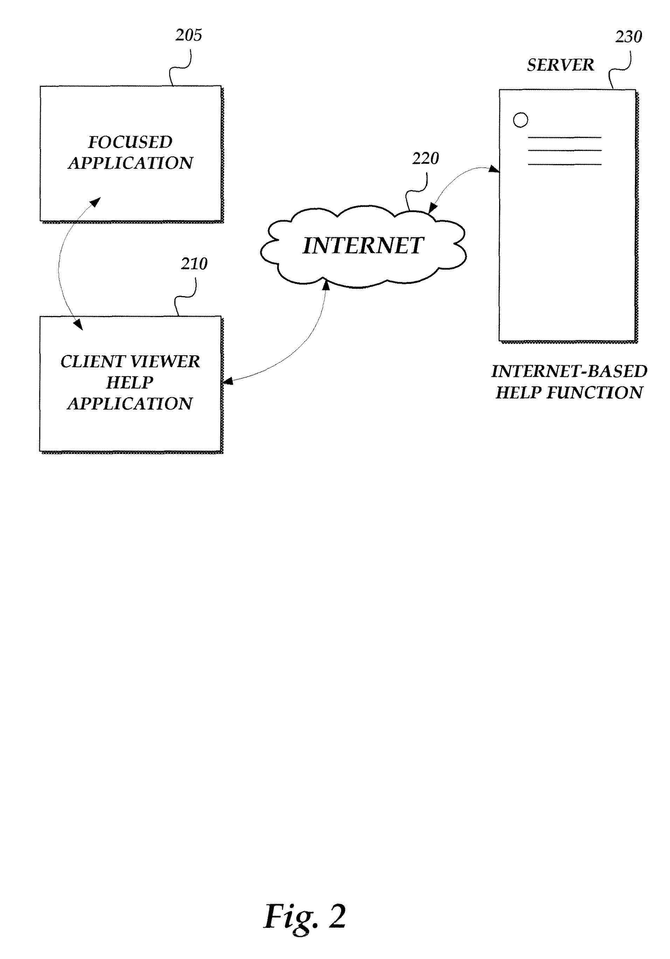

According to embodiments of the present invention, when a user requests help content associated with a given topic, an attempt is first made to retrieve the requested help content from an online source via a connection across a distributed computing network such as the Internet. If a connection with an online help content source may not be achieved, then help content responsive to the requested help topic is provided from an offline store of pre-populated help content maintained on the user's local computer 2. Fig. 2 is a simplified block diagram showing interaction between a focused on client application, a client help application, and a server-side help content source according to embodiments of the present invention. When a user desires help content associated with a given help topic, a focused on software application 205, such as a word processing application, spreadsheet application, slide presentation application, and the like calls a client-side help content application 210 for launching an integrated help content viewer according to embodiments of the present invention. The client help application 210 attempts connection with an online Internet-based help function 230 across the Internet 220 for obtaining help content responsive to a selected or entered request. As will be described in detail below, if connection between the client-side help application 210 and the server-side Internet-based help function 230 is not available, then the client-side help application 210 retrieves help content responsive to the selected help topic from a local help content store maintained on the user's local computer 2.

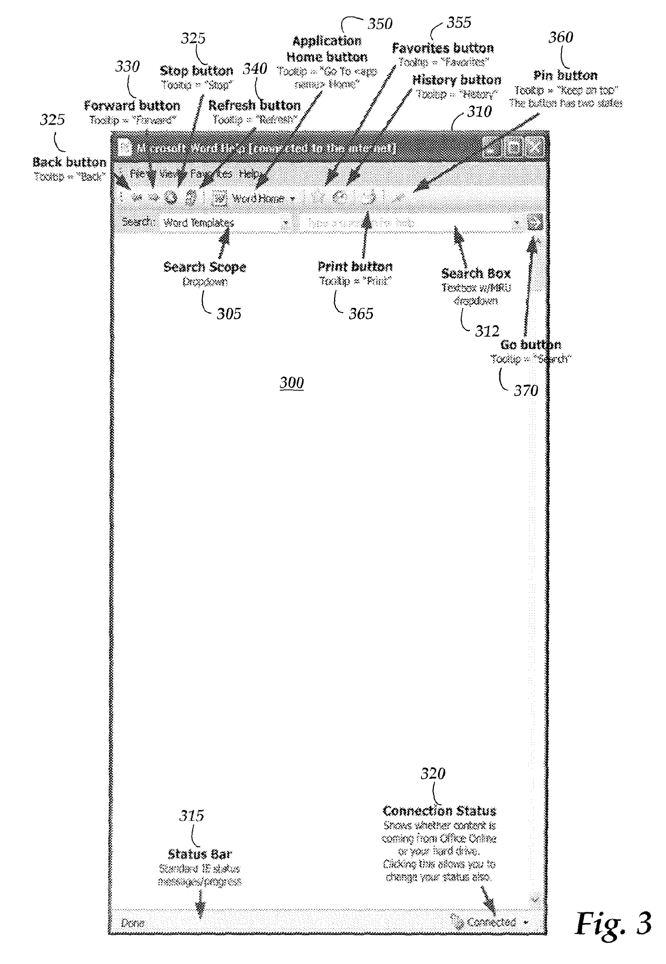

Fig. 3 illustrates a computer screen display showing an integrated help content viewer according to embodiments of the present invention. The integrated help content viewer 300 is a user interface into which a help topic or request may be entered and in which search results responsive to the selected or entered help topic are displayed. According to embodiments of the present invention, the help content viewer 300 may be utilized across a plurality of different applications, for example a word processing application, a spreadsheet application, a slide presentation application, a tasks manager application, a database application, and the like.

According to embodiments of the present invention, the language associated with the help content viewer (e.g., English, French, Japanese, etc.) may be changed to suit the needs of different users. If the language is changed from a first language to a second language, help content may be retrieved from offline and online sources associated with the selected language. According to one embodiment, user interface software upgrades, plug-ins, add-ins and the like may be applied to a given application to enable the help content viewer of the present invention to search and display help content according to a selected language.

In order to alert the user as to the present help scope of the launched content viewer 300, a title bar 310 is provided for identifying the present help scope associated with the launched viewer 300. For example, referring to Fig. 3, the title bar 310 includes the scope identification of "Microsoft Word Help [connected to the Internet]" to identify that the present help scope is associated with a word processor application and that help content may be retrieved from an online help content source via the Internet. Other information contained in the viewer 300 identifies the present scope of the viewer 300 such as the application home button 345 which is indicative of a present software application to which the presently launched viewer is associated.

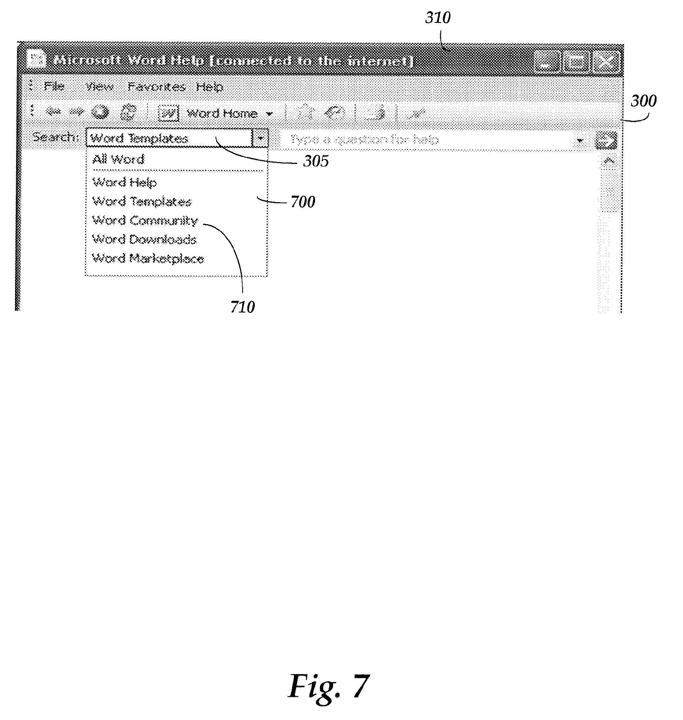

The search scope text box 305 indicates a present scope of the launched viewer. As described below with respect to Figure 7, a drop-down menu 700 may be provided below the search scope text box 305 for showing search scopes associated with previous search queries made by a user. One method of changing the scope of the search is to select one of the search scope topics listed in the drop-down menu 700.2. Once a search scope is selected and a particular help topic is identified in the search box 312, the "Go" button 370 may be selected to initiate a search of an online or offline store of help content associated with the selected search scope and selected or entered help topic. Once search results are retrieved from either an online or offline help content store, the results of the search are displayed in the display area of the viewer 300 for browsing by a requesting user. According to one embodiment of the present invention, help search results are displayed in the viewer 300 according to a Hypertext Markup Language (HTML) format. If help content is retrieved from an Internet-based help content store or web site, information responsive to the help content search may be formatted for a best fit in the viewer 300. For example, content pulled from an Internet website may be stripped of certain associated functionalities or controls that are not useful in the viewer 300.

A number of browsing functionality buttons such as the "Back" button 325, the "Forward" button 330, the "Stop" button 335, and the "Refresh" button 340 allow a user to browse through displayed search results in a manner similar to browsing through search results displayed in an Internet browsing application. Similarly, a "Favorites" button 350 and a "History" button 355 allow a user to store and browse favorite search results content, or browse previously searched help content.

As will be described below, according to embodiments of the present invention, the help content viewer 300 may be pinned to a particular application user interface so that the viewer remains in a position on top of the user interface to which the viewer is pinned. A "Pin" button 360 is provided for selectively pinning the help content viewer 300 to a particular application user interface, or for selectively un-pinning the content viewer to a given application user interface.

Along the lower edge of the viewer 300 is included a status bar 315 for showing the present status of a given help content search. If a help content search either from an online or offline content store is complete, an indication of "Done" may be provided. If a search for help content is in progress, a status indication such as "Search in Progress" may be provided. To the right of the status bar 315 is a connection status bar 320 for providing a present offline versus online connection status. For example, a connection status of "Connected" indicates that the client help application 210 is presently connected to an online help content store. On the other hand, a connection status of "Not Connected" indicates that the client-side help application 210 is not connected to an online help content store and that any help content retrieved and displayed during the offline (not connected) state will be retrieved from an offline help content store maintained locally on the user's local computer 2.

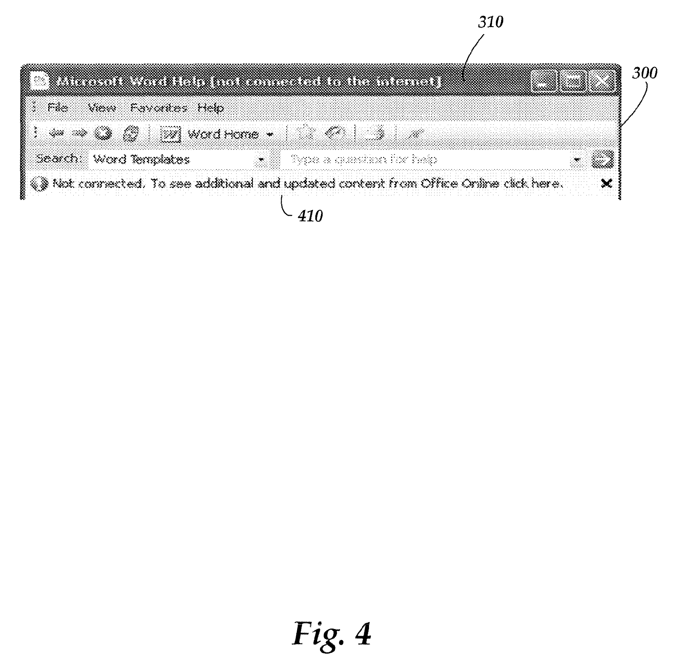

According to embodiments of the present invention, a preferred connection status is that of an online connection so that help content retrieved responsive to a selected or entered help request is most up-to-date and more responsive. Referring to Fig. 4, if during a given help content session, a loss of connection between the client-side help application 210 and the server-side help function 230 occurs, a notification alert 410 may be provided in the content display area of the viewer 300 to alert the user as to the loss of connection. Upon a loss of online connection, the client-side help application 210 automatically switches to an offline mode and searches an offline store for help content responsive to the selected or entered help request. Any retrieved help content is then displayed in the viewer 300. Accordingly, the user is made aware that the online help session has been lost, but the user is provided help content from the local help content automatically so that the help session is not interrupted or terminated.

According to one embodiment, retrieved offline search results (either due to a loss of connection or by user choice) may provide useful information about available online help. For example, the results of an offline search may provide links to online information sources along with useful information to instruct the user on how to go online to search the online sources. For example, selection of an online link while the user is in an offline mode may cause a prompt to alert the user that the user must be connected to the online source to receive the requested online information.

Having described the help attributes and operation of the help content viewer 300 with respect to Figs. 3 and 4, Fig. 5 is a flow diagram showing an illustrative routine for displaying help content in the integrated help content viewer 300 and for transitioning between an offline and online connection state according to embodiments of the present invention. The routine 500 begins at start block 505 and proceeds to block 510 where a user launches the help content viewer 300 for obtaining help information associated with a given topic. As should be understood by those skilled in the art, a number of mechanisms may be used for launching the help content viewer 300 such as the selection of a key such as the F1 key, or by selection of a help icon provided in a toolbar or other functionality button array provided in a user interface presently in use. For example, consider that a user is typing a letter in a word processing application via a word processing application user interface comprising a work entry area and a variety of functionality controls or buttons. Consider also for example that the user desires information on formatting text. The user may launch the help content viewer 300 of the present invention by selecting a help icon or button provided by the user's word processing application user interface, or by selection of a keyboard key such as the F1 key.

At block 515, the client help application 210 determines whether it is presently connected to the online Internet-based help function 230 for obtaining help content. If the help application 210 is not presently connected to the online help function 230, a notification may be provided to the user such as the notification 410 illustrated in Fig. 4, and the connection status 320 may indicate a status of "Not Connected." At decision block 520, if online connection is desired, the routine proceeds to block 525, and the user may select for connection to be established, or alternatively, connection may be automatically established upon a determination by the help application 210 that connection is not established or has otherwise been lost. If connection is not desired, the routine proceeds to block 550 for offline help content as described below.

At block 525, after connection is established, the client-side help application 210 receives the help request from the user, for example text formatting, and, at block 530, the entered or selected help request is passed to the server-side Internet-based help function 230 by the client-side help application 210 for obtaining help content responsive to the entered or selected help request. At block 535, the client-side help application 210 formats the retrieved help content and displays the help content in the client-side help content viewer 300 as described above.

According to one embodiment of the present invention, when help content is retrieved from the server-side help function 230, the client-side help application 210 dynamically stores the retrieved content in a client-side cache for subsequent offline use. Accordingly, if online connection is subsequently lost or is otherwise interrupted or terminated, the client-side help application 210 may provide enhanced help content by utilizing content stored on the client-side from the online help function 230.

At block 545, if online connection is lost during an online help session, an alert such as alert 410 illustrated in Fig. 4 is provided in the help content viewer 300 to notify the user that online connection has been lost. Additionally, the connection status 320 is changed from a status of "Connected" to a status of "Not Connected." At block 550, the client-side help application 210 automatically searches on offline cache or store for help content responsive to the help request entered or selected by the user. At block 555, the help content retrieved from the offline cache or store is displayed in the help content viewer 300 as described above. According to one embodiment, the offline cache or store contains pre-populated help content responsive to a variety of help content searches or topics. As described above, according to another embodiment, the offline cache or store of help content information may be supplemented or updated by content retrieved from the online help function. In either case, if the help content retrieved from the offline cache or store is less than information that would be available from the online cache or store, the information or help content retrieved from the offline cache or store is nonetheless displayed to the user so that the user's help session is not interrupted or otherwise terminated because of a loss of online connection.

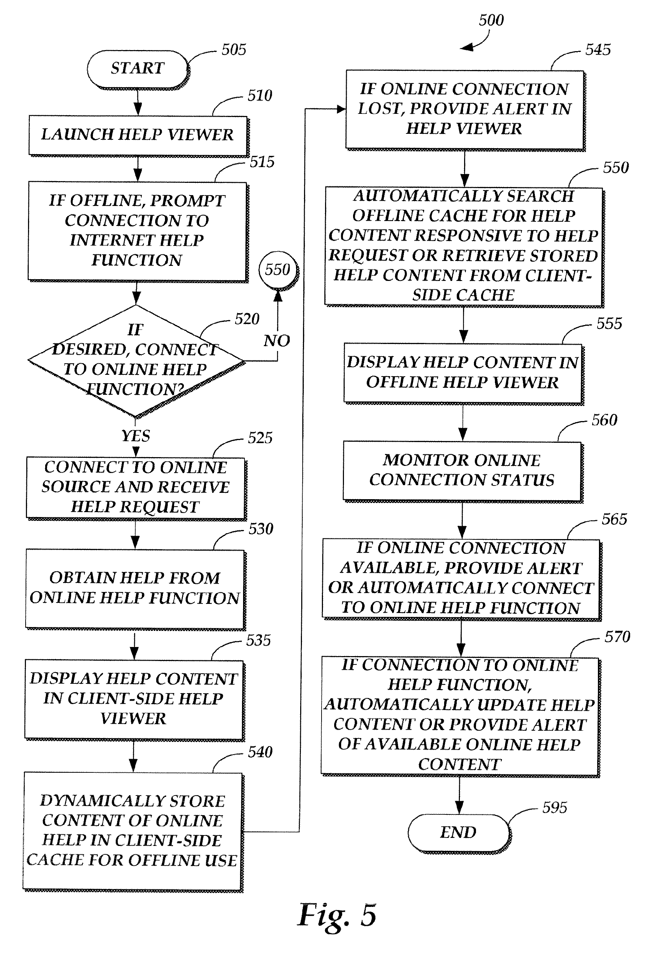

Referring still to Fig. 5, at block 560, the client-side help application 210 monitors the online connection status. At block 565, if online connection becomes available after a connection loss, an alert may be provided in the content viewer to notify the user that an online help session may be resumed. According to one embodiment, the user may selectively reconnect to the online help function. If the user does selectively reconnect to the online help function, search results responsive to the user's help content request will be retrieved from the online help content cache or store and will be displayed to the user as described above. According to an alternative embodiment, if online connection becomes available, the client-side help application 210 automatically reestablishes connection with the online help function 230 and updates the help content displayed in the help content viewer 300. At block 570, additional help content available from the online cache or store is automatically updated in the content viewer 300, or an alert may be provided to the user to allow the user to selectively receive the updated help content available from the online cache or store. The routine ends at block 595.

According to embodiments of the present invention, the client help application 210 and help content viewer 300 may advantageously communicate directly with a plurality of applications comprising a multiple application suite, for example a word processing application, a spreadsheet application, a slide presentation application, a database application, and the like. As briefly described above, the help content viewer 300 is initially scoped according to an application from which the help content viewer 300 is launched. That is, if the viewer 300 is launched from a word processing application for obtaining help content associated with some functionality or topic associated with word processing, then the help content viewer 300 will be scoped for the word processing application. As described above with reference to Fig. 3, the present scope of the viewer 300 is identified in a title bar 310 and in other locations in the viewer 300 including the application home button 345 and the search scope text box 305.

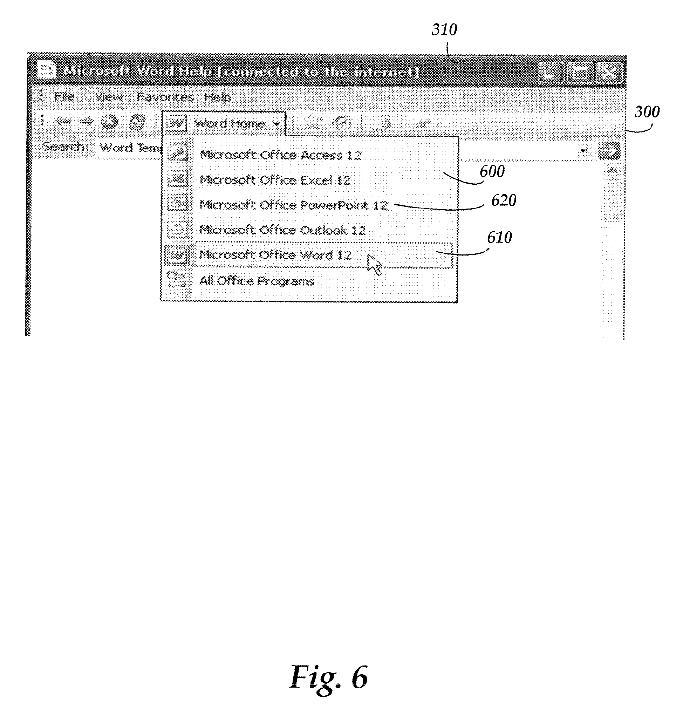

According to embodiments of the present invention, the scope of the help content viewer 300 may be manually and selectively changed by a user by selecting the application home button 345 to present a drop-down of alternative application scopes. Referring to Fig. 6, the drop-down 600 under the application home button 345 illustrates a plurality of different help content search scopes that may be utilized and to which the help content viewer 300 may be manually and selectively changed. For example, if the present scope of the help content viewer 300 is associated with a word processing application, and a user desires help content associated with a slide presentation application, the user may select the application home button 345 to display the drop-down 600 illustrated in Fig. 6. The user may then select the slide presentation application scope button 620 to automatically change the scope of the help content viewer 300 accordingly. Once the scope of the help content viewer 300 is thus changed, a subsequent help content request entered or selected by the user will cause the client-side help application 210 to search for online or offline help content associated with a selected or entered help topic according to a slide presentation application scope. Referring to Fig. 7, a variety of search scopes also are illustrated in the drop-down menu 700 beneath the search scope text box 305. As described above, the drop-down menu 700 shows search scopes associated with previous search queries made by a user. As should be understood, the user may select a different search scope from the search scopes shown in the search scope drop-down 700 to manually change the scope of a given search.

According to an alternative embodiment, the scope of the help content viewer 300 may be changed automatically when a different application invokes the help content viewer 300. For example, if the user is presently utilizing a word processing application, and the user launches a different application, for example a spreadsheet application, followed by selection of a help function key or icon from the second application, the scope of the help content viewer 300 will be automatically changed to a scope associated with the second application from which a help function is invoked. According to this example, the scope of the help content viewer would be changed to a spreadsheet application scope.

According to another embodiment, the scope of the help content viewer may be automatically changed if a user navigates to a help content search result associated with a different scope. For example, if the user is presently browsing search results displayed in the help content viewer 300 associated with a help topic related to a word processing application, but the user navigates to a portion of the help content search results associated with a different scope, for example a spreadsheet application scope, the present scope of the help content viewer 300 may be changed to a scope associated with the help content navigated to by the user, for example spreadsheet application scope.

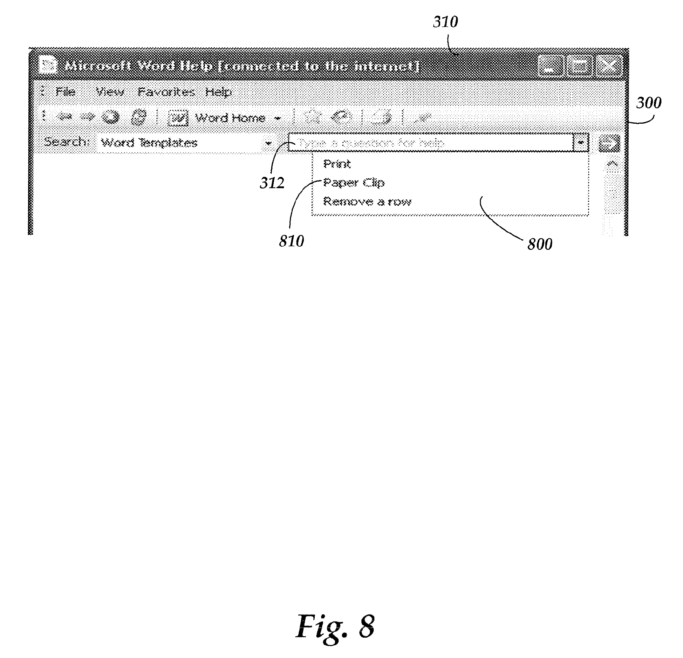

Referring now to Fig. 8, once a given search scope is established, a particular help content topic or request may be entered into the search box 312 by the user. A drop-down list of most recently entered help topics 800 may be displayed to allow the user to select a previously entered help topic/request. As described above, once a help topic is entered or selected, the "Go" button 370, illustrated in Fig. 3, may be selected to initiate an online or offline help content search as described above with reference to Fig. 5.

According to embodiments of the present invention, software applications, for example word processing applications, spreadsheet applications, and the like, from which the help content viewer 300 are launched may control the size and position of the viewer 300. For example, the viewer 300 may be launched in a position overlaying a user interface associated with a given application. Alternatively, the viewer 300 may be sized for fitting adjacent to a work space of a given application user interface. Additionally, the size of the display area of the viewer 300 may be reduced or expanded in order to accommodate varying amounts of displayed help content.

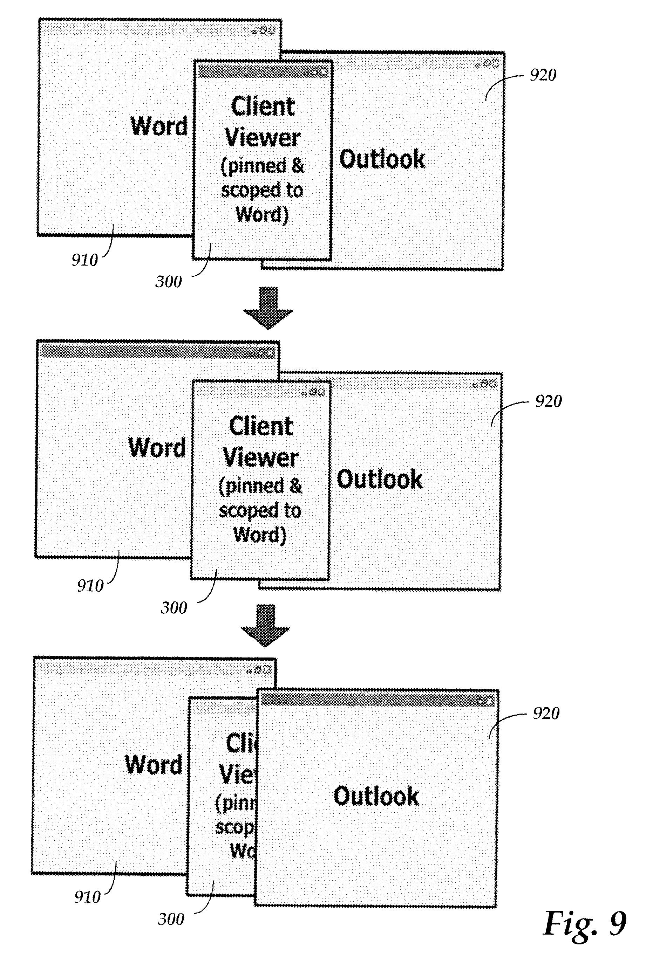

Referring to Fig. 9, according to embodiments of the present invention, the help content viewer 300 may be pinned to a particular application user interface so that the pinned help content viewer 300 remains in a position on top of the associated application user interface. For example referring to Fig. 9, if the word processing application user interface 910 is the presently focused on application, the client help content viewer 300 may be pinned and scoped to the word processing application user interface 910. Accordingly, the viewer 300 remains in a position such that the viewer 300 is displayed on top of the word processing application user interface 910. If the user has previously selected the user interface of a different application for example an electronic mail and calendaring application user interface 910, the help content viewer 300 nonetheless remains in a position on top of the focused on word processing application user interface 910. Referring to the bottom of Fig. 9, if the user focuses on the second application user interface, for example the electronic mail and calendar user interface 920, that user interface moves to the top position, but the help content viewer 300 remains in a position on top of the word processing application user interface 910 to which it is presently pinned and scoped.

As briefly described above, and as illustrated in Fig. 3, if the user selects the pin button 360 to unpin the help content viewer 300 from its associated scoped application, then the help content viewer acts in a fashion similar to any other windowing frame, and the viewer will be in a position relative to other windows based on the timing of its selection. For example, if the viewer 300 is the third in line of selection after it has been unpinned, then the viewer will be third in line in terms of its position of display. For example, the user interface 920 may be on top, the word processing user interface 910 may be second, and the viewer 300 may be in a third position. On the other hand, if the viewer 300 is pinned to a given user interface, then the viewer 300 will remain in an "always on top" position relative to the associated pinned user interface.

If the scope of the viewer 300 is changed to a different application and the viewer 300 is selected to be pinned to a scoped user interface, then the viewer 300 will move to an "always on top" position relative to the new application to which the scope has changed. For example, referring to Fig. 9, if the scope of the help content viewer 300 is changed to the electronic mail and calendaring application user interface 920, as described above with reference to Figs. 6 and 7, then the help content viewer 300 will move to a position on top of the electronic mail and calendaring application user interface 920.

According to an embodiment of the present invention, content displayed in the help content viewer 300 may control functionality of an application to which the help content viewer 300 is presently scoped. That is, software coding contained in the displayed content in the viewer 300 may automatically or selectively control functionality of the associated application. For example, if help content displayed in the viewer 300 includes coding for changing the print functionality of an associated word processing application such that a document is printed according to an alternative font, a button may be supplied in the displayed help content to allow the user to selectively print the document according to the alternative font directly from the help content viewer. According to one embodiment, software code in the associated application, for example a word processing application, is exposed to code contained in the help content displayed in the content viewer 300. Accordingly, code contained in the content displayed in the content viewer 300 calls the code exposed by the application and executes the exposed code. According to an alternative embodiment, the content displayed in the help content viewer passes a reference to the associated application code to allow the associated application to download, interpret and execute code contained in the help content so that the associated application runs the referenced code contained in the help content.

As described herein, an integrated help content viewer for managing offline and online help content is provided. It will be apparent to those skilled in the art that various modifications or variations may be made in the present invention without departing from the scope or spirit of the invention. Other embodiments of the invention will be apparent to those skilled in the art from consideration of the specification and practice of the invention disclosed herein.

## Claims

1. A method of managing content retrieval and display from offline and online content sources, comprising:
retrieving online help content from the online help content source responsive to a request for help content;
displaying the retrieved online help content in a help content user interface;
if a connection to the online help content source is lost while online help content is being retrieved for display in the help content user interface, providing a notification in the help content user interface that the connection to the online help content source has been lost;
automatically retrieving offline help content responsive to the request for help content from the offline help content source; and
displaying the retrieved offline help content in the help content user interface.

2. The method of claim 1, further comprising storing the retrieved online help content in an offline help content store for retrieval by the help content user interface when a connection with the online help content source may not be established.

3. The method of claim 1, further comprising formatting the retrieved online help content for display in the help content user interface.

4. The method of claim 3, whereby formatting the retrieved online help content for display in the help content user interface includes formatting the retrieved online help content according to the Hypertext Markup Language (HTML).

5. The method of claim 3, further comprising formatting the retrieved offline help content for display in the help content user interface.

6. The method of claim 5, whereby formatting the retrieved offline help content for display in the help content user interface includes formatting the retrieved offline help content according to the Hypertext Markup Language (HTML).

7. The method of claim 1, whereby prior to retrieving online help content from the online help content source responsive to a request for help content, launching the help content user interface in association with a deployed software application user interface.

8. The method of claim 7, further comprising selectively pinning the launched help content user interface to the deployed software application user interface so that the launched help content user interface is positioned on top of the deployed software application user interface.

9. The method of claim 8, further comprising setting a help content search scope for the help content user interface to a scope associated with the deployed software application user interface.

10. The method of claim 9, further comprising providing an indication of a present help content search scope for the help content user interface in the help content user interface.

11. The method of claim 10, further comprising automatically changing the help content search scope to a scope associated with a deployed software application user interface of a second software application if the help content user interface is invoked in association with the second software application.

12. The method of claim 10, further comprising automatically changing the help content search scope to a different scope upon receiving an indication of navigation to a help content item displayed in the help content user interface that is associated with the different scope.

13. A method of managing content retrieval and display from offline and online content sources, comprising:
launching a help content user interface;
receiving a help content request in the help content user interface;
monitoring a connection to an online help content source;
if a connection to an online help content source is established, passing the request for help content to the online help content source;
retrieving online help content from the online help content source responsive to the request for help content;
displaying the retrieved online help content in the help content user interface; and
providing a notification in the help content user interface that the help content user interface is connected to the online help content source.

14. The method of claim 13, further comprising:
if a connection to the online help content source is not established, attempting to establish a connection with the online help content source;
providing a notification in the help content user interface that the help content user interface is not connected to the online help content source; and
if a connection to the online help content source may not be established, automatically passing the request for help content to the offline help content source.

15. The method of claim 14, further comprising:
retrieving offline help content from the offline help content source; and
displaying the retrieved offline help content in the help content user interface.

16. The method of claim 15, prior to displaying the retrieved offline help content in the help content user interface, formatting the retrieved offline help content for display in the help content user interface.

17. The method of claim 16, whereby formatting the retrieved offline help content for display in the help content user interface includes formatting the retrieved offline help content according to the Hypertext Markup Language (HTML).

18. The method of claim 13, prior to displaying the retrieved online help content in the help content user interface, formatting the retrieved online help content for display n the help content user interface.

19. The method of claim 18, whereby formatting the retrieved online help content for display in the help content user interface includes formatting the retrieved online help content according to the Hypertext Markup Language (HTML).

20. The method of claim 13, whereby launching a help content user interface includes launching the help content user interface in association with a deployed software application user interface.

21. The method of claim 20, further comprising selectively pinning the launched help content user interface to the deployed software application user interface so that the launched help content user interface is positioned on top of the deployed software application user interface.

22. The method of claim 21, further comprising setting a help content search scope for the help content user interface to a scope associated with the deployed software application user interface.

23. The method of claim 22, further comprising providing an indication of a present help content search scope for the help content user interface in the help content user interface.

24. The method of claim 23, further comprising automatically changing the help content search scope to a scope associated with a deployed software application user interface of a second software application, if the help content user interface is invoked in a association with the second software application.

25. The method of claim 24, further comprising automatically changing the help content search scope to a different scope upon receiving an indication of navigation to a help content item displayed in the help content user interface that is associated with the different scope.

26. A computer-readable medium containing computer-executable instructions which when executed by a computer perform a method of managing content retrieval and display from offline and online content sources, comprising:
retrieving online help content from the online help content source responsive to a request for help content;
displaying the retrieved online help content in a help content user interface;
if a connection to the online help content source is lost while online help content is being retrieved for display in the help content user interface, providing a notification in the help content user interface that the connection to the online help content source has been lost;
automatically retrieving offline help content responsive to the request for help content from the offline help content source; and
displaying the retrieved offline help content in the help content user interface.

27. The computer-readable medium of claim 26, further comprising storing the retrieved online help content in an offline help content store for retrieval by the help content user interface when a connection with the online help content source may not be established.

28. The computer-readable medium of claim 26, further comprising formatting the retrieved online help content for display in the help content user interface.

29. The computer-readable medium of claim 28, whereby formatting the retrieved online help content for display in the help content user interface includes formatting the retrieved online help content according to the Hypertext Markup Language (HTML).

30. The computer-readable medium of claim 28, further comprising formatting the retrieved offline help content for display in the help content user interface.

31. The computer-readable medium of claim 30, whereby formatting the retrieved offline help content for display in the help content user interface includes formatting the retrieved offline help content according to the Hypertext Markup Language (HTML).

32. The computer-readable medium of claim 26, whereby prior to retrieving online help content from the online help content source responsive to a request for help content, launching the help content user interface in association with a deployed software application user interface.

33. The computer-readable medium of claim 32, further comprising selectively pinning the launched help content user interface to the deployed software application user interface so that the launched help content user interface is positioned on top of the deployed software application user interface.

34. The computer-readable medium of claim 33, further comprising setting a help content search scope for the help content user interface to a scope associated with the deployed software application user interface.

35. The computer-readable medium of claim 34, further comprising providing an indication of a present help content search scope for the help content user interface in the help content user interface.

36. The computer-readable medium of claim 35, further comprising automatically changing the help content search scope to a scope associated with a deployed software application user interface of a second software application if the help content user interface is invoked in association with the second software application.

37. The computer-readable medium of claim 36, further comprising automatically changing the help content search scope to a different scope upon receiving an indication of navigation to a help content item displayed in the help content user interface that is associated with the different scope.

38. A method of managing content retrieval and display from offline and online content sources, comprising:
launching a help content user interface in association with a deployed software application user interface;
selectively pinning the launched help content user interface to the deployed software application user interface so that the launched help content user interface remains positioned on top of the deployed software application user interface until the launched help content user interface is unpinned from the deployed software application user interface.

39. The method of claim 38, further comprising unpinning the help content user interface from the deployed software application user interface by changing a search scope of the help content user interface from a scope associated with the deployed software application to a scope associated with a different deployed software application user interface.

40. The method of claim 39, further comprising providing an indication of a present help content search scope for the help content user interface in the help content user interface.

41. A computer-readable medium containing computer-executable instructions which when executed by a computer perform a method of managing content retrieval and display from offline and online content sources, comprising:
launching a help content user interface in association with a deployed software application user interface;
selectively pinning the launched help content user interface to the deployed software application user interface so that the launched help content user interface remains positioned on top of the deployed software application user interface until the launched help content user interface is unpinned from the deployed software application user interface.

42. The computer-readable medium claim 41, further comprising unpinning the help content user interface from the deployed software application user interface by changing a search scope of the help content user interface from a scope associated with the deployed software application to a scope associated with a different deployed software application user interface.

43. The computer-readable medium claim 42, further comprising providing an indication of a present help content search scope for the help content user interface in the help content user interface.
